# EUROPEAN PATENT APPLICATION

(11) **EP 1 630 998 A1**
(43) Date of publication of application: **01.03.2006**
(21) Application number: 04735806.4
(22) Date of filing: 02.06.2004
(51) Int. Cl.: H04L 9/08, G06F 12/14

(54) **USER TERMINAL FOR RECEIVING LICENSE**

(30) Priority: 05.06.2003 JP 2003160260
(71) Applicant: MATSUSHITA ELECTRIC INDUSTRIAL CO., LTD., Kadoma-shi, Osaka 571-8501 (JP)
(72) Inventor: SHIMOJIMA, Takashi, Chiba 279-0002 (JP); SATO, Mitsuhiro, Kanagawa 243-0216 (JP)
(74) Representative: Grünecker, Kinkeldey, Stockmair & Schwanhäusser Anwaltssozietät
(86) International application number: PCT/JP2004/008015
(87) International publication number: WO 2004/109972

(57) **Abstract**

The invention is directed to a device that carries out secure distribution of a license particularly necessary for using a digital content in a copyrighted digital content distribution system. By a method of distributing a license according to the invention, a license encryption key for distribution is produced by a license distribution server based on a seed produced on the user terminal side according to a prescribed function F and the user terminal transmits a license based on the same seed and the same function F by a common-key method in a tamper resistant module. On the user terminal side, the stored seed is deleted once the license is decrypted.

## Description

### <TECHNICAL FIELD>

The present invention particularly relates to a secure method of distributing a license particularly necessary for using a digital content in a copyrighted digital content distributing system.

### <BACKGROUND ART>

In recent years, there has been an increasing demand for digital content distributing service through communication or broadcasting.

For example, such a music distributing service has been started that allows music data to be downloaded to a mobile phone and recorded in a storage medium connected to the mobile phone, so that the music data is reproduced using the mobile phone or another reproducing device whenever desired by the user. The service for distributing contents other than music including video data such as motion pictures, and document data such as newspaper articles, *Manga,* and novels has started.

When a content is electronically distributed, how to protect the copyright by preventing unauthorized use or copying of the recorded content is critical. To countermeasure unauthorized copying or tampering, a copyrighted content is encrypted before distribution. There must be a system for secure distribution to the user so that the key for decrypting the content (title key) and use control information for controlling the number of times of using or the period of using the content as well as the content are not unlawfully copied or tampered. Hereinafter, the title key together with the user control information will be referred to as "license".

As a related license distributing method, there is a known content distribution system in which reproducing key data for decrypting and reproducing an encrypted content is encrypted using an ID that specifies a player who has purchased the content before distribution (see for example Patent Document 1: JP-A-2000-298943, PP. 5 to 7, Fig. 7).

Now, a general concept of the invention disclosed by Patent Document 1 (hereinafter as "Known Example 1") will be described. Fig. 16 shows an example of how the content distribution system disclosed by Known Example 1 operates. Known Example 1 is directed to a content distribution system that protects the copyright of a content by preventing the content data from being downloaded to an unauthorized distribution terminal (player). An authoring system 1301 carries out primary encrypting to reproducing key data used to decrypt and reproduce encrypted content data on the side of the player 1305 by the Web server 1303 and the resulting key data is transmitted together with the encrypted content to a Web server 1303 through a transmitting server 1302. Then, the primary encryption reproducing key data is subjected to secondary encryption using the ID of the player 1305 at the Web server 1303 and the resulting data is transmitted together with the encrypted content to the player 1305 through an Internet service PC client 1304. The secondary encryption reproducing key data is decrypted using its ID on the side of the player 1305, and then the primary encryption reproducing key data is decrypted into the reproducing key data, so that the encrypted content can be decrypted with the data and used.

According to another license distribution method, multiple content distribution keys regarding content distribution are shared between a content provider and a user home network, both parties select a key for distribution based on prescribed common rules and carry out encryption and decryption (see for example Patent Document 2, JP-A-2001-75924, pp. 10 to 14, Fig. 1).

Now, a general concept of the invention disclosed by Patent Document 2 (hereinafter as "Known Example 2") will be described. Fig. 17 is a general view of a content distribution system in Known Example 2. Known Example 2 is directed to a data providing system that provides content data from a content provider 1401 to a user home network 1403, and the content provider 1401 provides a secure container 1404 storing content data encrypted using content key data, the content key data encrypted using key data for distribution, and encrypted title deed data that guides how to handle the content data to a SAM (Secure Application Module) 1405_1 stored in network equipment 1460_1 in the user network 1403 or a SAM 1405_2 stored in AV equipment 1460_2. The SAM 1405_1 or the like decrypts the content key data and the title deed data stored in the secure container using the key data for distribution and determines how the content data has been purchased or is to be used based on the decrypted title deed data. In this example, the content provider 1401 and the SAM 1405_1 or the like in the user home network 1403 share multiple key data pieces for distribution corresponding to a particular period. The key data for distribution is managed by an EMD service center 1402 and distributed in advance to the content provider 1401 and the SAM 1405_1 in the user home network 1403. At the time, both parties share pieces of key data for distribution KD1 to KD6 for example for six months, and content key data is encrypted by the content provider 1401 using the key data for distribution KD1 for example for a certain month, and the SAM 1405_1 in the user home network 1403 decrypts using the same key data for distribution KD1. In this way, content key data is securely transmitted between the content provider 1401 and the SAM 1405_1 in the user home network 1403.

According to the method by Known Example 1, however, when the reproducing key data is subjected to secondary encryption using the ID of the player 1303 for transmission, the reproducing key data after the secondary encryption cannot be used by any player other than the player 1303 for sure, but if a malicious user intercepts or copies the secondary encryption reproducing key data in the communication path between the Web server 1305 and the Internet service PC client 1306 or on the Internet service PC client 1306, the player cannot re-use the secondary encryption reproducing key data. If no use limitation information such as about the number of times for performing the content is attached to the content, in other words, if the content can be performed as many times as desired, there will be no problem. However, in a content distribution system where some use limitation information is attached to the reproducing key data, and the use of the content is limited based on the use limitation information, for example if the audible/viewable number of times at the time of purchasing the content is "10", and after listening to the content ten times, the audible/viewable number of times is "0", secondary encryption reproducing key data and use limitation information that has been copied could be used to give the authorization to perform the content another "10" times.

In Known Example 2, several key data pieces for distribution are shared between the distributing source and the destination, and the key to be used to encrypt content key data is changed between periods. However, during the same period, this system could allow the encrypted content key data to be copied and re-used.

In Known Example 1, applications run on the Internet service PC client 1304 that receives the content or the secondary encryption reproducing key data and transfers them to the player 1305 must be subjected to tamper resistant coding for fear that highly important data such as content key data is stolen by unlawful attacks such as disassembling by a malicious user. Herein, the term "tamper resistant" refers to resistance to conducts such as alteration and tampering, and the term "tamper resistant coding" refers to a technique of compiling/installing software that prevents tampering for unauthorized use or analysis of secret information. The tamper resistant coding by software requires a lot more person hours for development than an application with no tamper resistant coding. This is because a debugger detection function must be provided to prevent a program from being analyzed as it is programmed, or codes must be encrypted or made difficult to read to countermeasure the use of a disassembler. Therefore, it is desirable that the secrecy of highly important data such as content key data is maintained while a module part as small as possible except for the user interface part is subjected to tamper resistant coding, or that the tamper resistant module can be used as it is in common between various applications (such as a music distribution corresponding application and a video distribution corresponding application). In this case, if an upper application module without tamper resistant coding is attacked by a malicious user, the license distribution method must not allow unauthorized use of the license.

The present invention is directed to a solution to the disadvantage and it is an object of the invention to prevent unauthorized copying and re-use of a license including a title key and use control information necessary for using a digital content in a copyrighted digital content distribution system, prevent unauthorized copying and re-use of a license and efficiently develop tamper resistant software at a receiving terminal.

### <DISCLOSURE OF THE INVENTION>

According to the invention, in order to achieve the above described object, in a digital content distribution system including a content distribution server, a license distribution server and a user terminal, the user terminal includes seed producing/storing unit for producing and storing a seed for producing a license encryption key for distribution to be used to encrypt a license at the time of distribution, and encryption conversion unit carrying out encryption conversion to a content and a license based on the encrypted content for distribution and the encrypted license for distribution by an encryption method unique to the user terminal and storing the result in the data storing unit. The license distribution server includes license encrypting unit for producing a key based on a seed included in a license obtaining request received from the user terminal and a predetermined algorithm (a function F for example) and encrypting the license data for distribution. In this structure, based on the seed produced on the user terminal side, a license encryption key for distribution is produced by the license distribution server according to the predetermined function F, while on the user terminal side, the same license encryption key for distribution as that on the license distribution server side is produced using the same seed and the same function F, so that the license can securely be transmitted by the common key method at the time of distribution and the seed stored in the seed producing/storing unit is deleted in the user terminal once the license is decrypted. In this way, if a malicious user unlawfully copies the encryption license for distribution in the distribution path or on the user terminal, seed information necessary for decrypting the encrypted license for distribution is deleted once the encryption conversion is carried out to the content and license. Therefore, the re-use of the copied license can be prevented.

At the user terminal, the seed producing/storing unit and the encryption conversion unit are formed into a tamper resistant module by software, and the other user interface part and the like are not made tamper resistant. In this way, the person hours necessary for development may efficiently be applied, and the tamper resistant module can commonly be used by a plurality of applications. Note that in this structure, the security of the encrypted license for distribution can be ensured by the above-described method.

### <BRIEF DESCRIPTION OF THE DRAWINGS>

Fig. 1 is a digital content distribution system according to a first embodiment of the invention;
Figs. 2 is a flowchart for use in illustration of a content obtaining sequence according to the first embodiment of the invention;
Fig. 3 is a flowchart for use in illustration of a content obtaining sequence according to the first embodiment of the invention;
Fig. 4 shows an example of license data stored in license storing unit 152 according to the first embodiment of the invention;
Fig. 5 is a flowchart for use in illustration of an encryption conversion sequence according to the first embodiment of the invention;
Fig. 6 shows an example of license data for storing in a user terminal according to the first embodiment of the invention;
Fig. 7 shows an example of a format of storing a content and a license according to the first embodiment of the invention;
Fig. 8 shows an example of a format of storing a content and a license database according to the first embodiment of the invention;
Fig. 9 is a diagram showing a concept of how a license is securely distributed from a license distribution server 150 to a user terminal 100 according to the first embodiment of the invention;
Fig. 10 is a diagram of the structure of a digital content distribution system according to a second embodiment of the invention;
Fig. 11 is a flowchart for use in illustration of a license obtaining sequence according to the second embodiment of the invention;
Fig. 12 is an example of an association table for seeds and seed identifiers stored by seed producing/storing unit 121 in a secret memory region according to the second embodiment of the invention;
Fig. 13 is a flowchart for use in illustration of an encryption conversion sequence according to the second embodiment of the invention;
Fig. 14 is a flowchart for use in illustration of a license obtaining sequence according to a third embodiment of the invention;
Fig. 15 is a flowchart for use in illustration of an encryption conversion sequence according to the third embodiment of the invention;

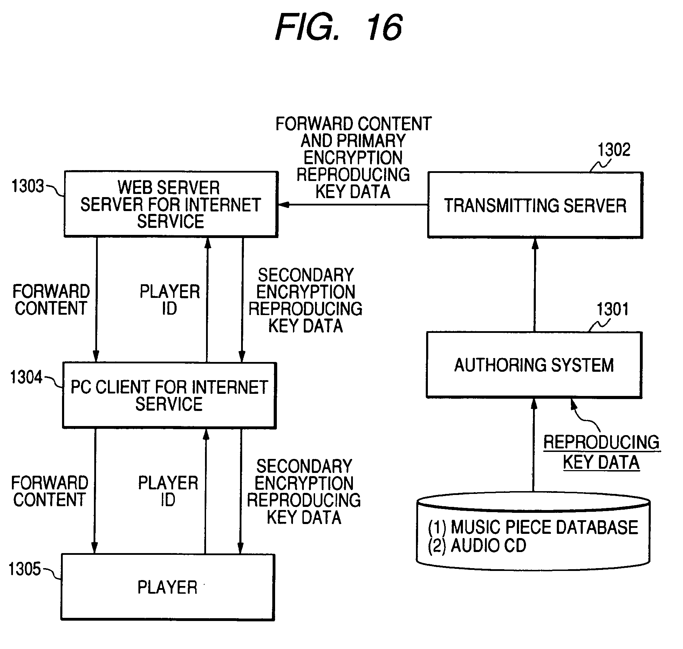

Fig. 16 shows an example of a content distribution system in Known Example 1;

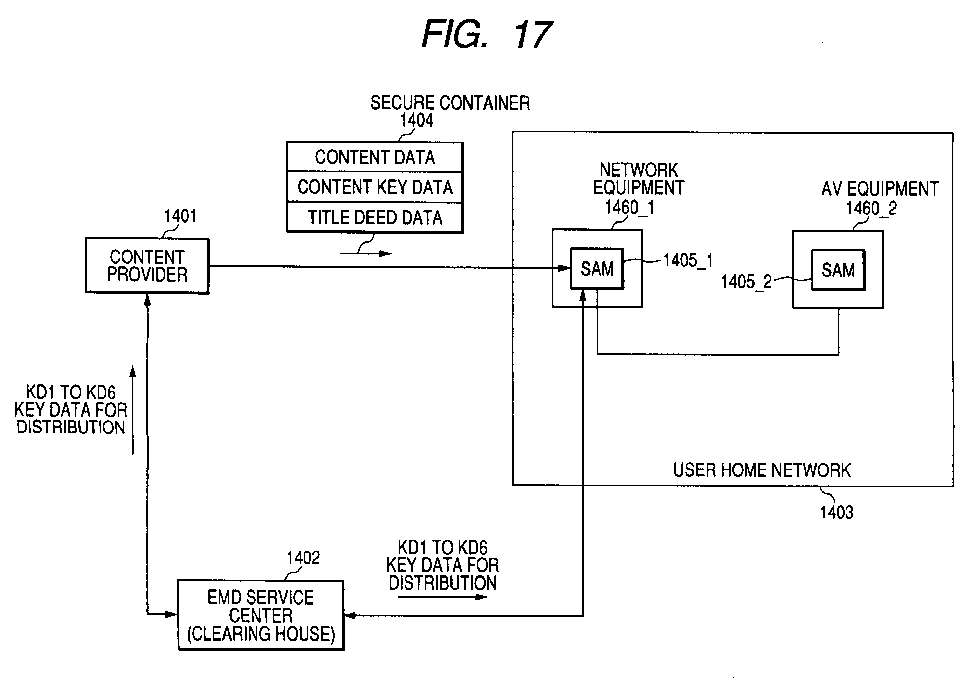

Fig. 17 is a diagram showing a general configuration of a content distribution system in Known Example 2; and
Fig. 18 is a diagram showing a digital content distribution system using an external secure device according to the first embodiment of the invention.

In the figures, the reference numerals refer to corresponding elements as in the following.

100 user terminal; 110 application module; 111 request transmitting unit; 112 content receiving unit; 113 license receiving unit; 114 process control unit; 120 tamper resistant module; 121 seed producing/storing unit; 122 encryption conversion unit; 130 data storing unit; 140 content distribution server, 141 content obtaining request receiving unit; 142 content storing unit; 143 content distribution unit; 150 license distribution server; 151 license obtaining request receiving unit; 152 license storing unit; 153 license encrypting unit; 154 license distribution unit; 160 secure device; 170 tamper resistant module; 171 seed producing/storing unit; 172 encryption conversion unit; 180 information storing unit; 181 general storing region; 182 secure storing region; 1301 authoring system; 1302 transmitting server, 1303 Web server, 1304 PC client; 1305 player; 1401 content provider; 1402 EMD service center; 1403 user home network; 1404 secure container; 1405 SAM; 1460_1 network equipment; 1460_2 AV equipment

### <BEST MODE FOR CARRYING OUT THE INVENTION>

Now, embodiments of the invention will be described. Note that the present invention is not limited to the embodiments and can be carried out in various modes without departing from the scope of the invention.

### (First Embodiment)

A digital content according to the invention cannot be performed if it is distributed unless a license is acquired. To this end, for example a digital content is encrypted and a key (title key) to decrypt the content is included in the license.

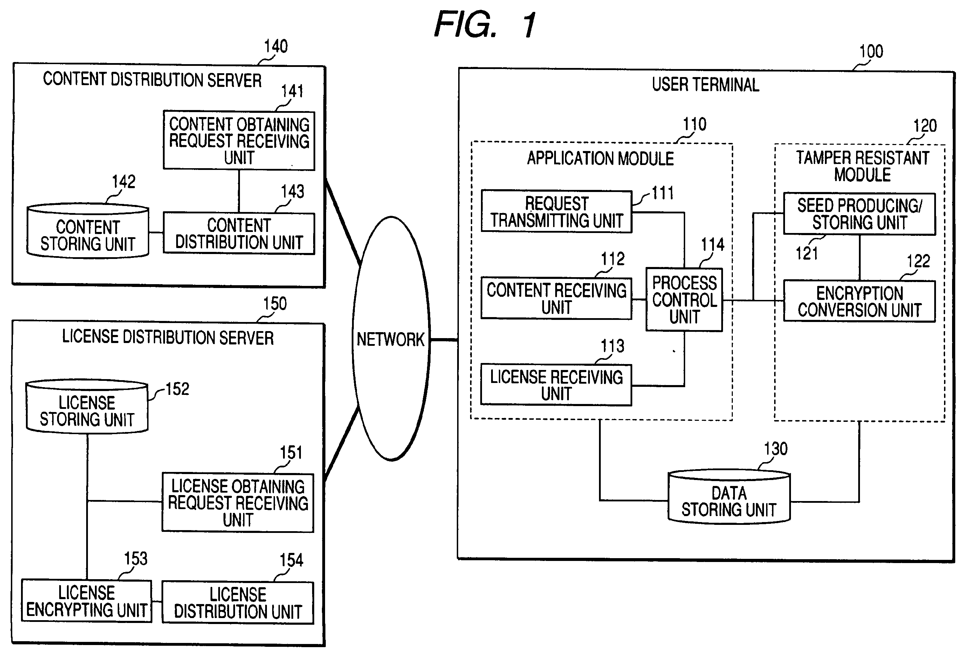

Fig. 1 is a diagram showing the configuration of a digital content distribution system according to a first embodiment of the invention. The digital content distribution system shown in Fig. 1 includes a user terminal 100, a content distribution server 140, and a license distribution server 150.

The user terminal 100 receives and manages contents and licenses, and includes an application module 110 having request transmitting unit 111, content receiving unit 112, license receiving unit 113, and process control unit 114, a tamper resistant module 120 provided with tamper resistance by software and having seed producing/storing unit 121 and encryption conversion unit 122, and data storing unit 130.

The request transmitting unit 111 transmits a content obtaining request to the content distribution server 140 or a license obtaining request to the license distribution server 150.

The content receiving unit 112 receives a content encrypted for distribution from the content distribution server 140.

The license receiving unit 113 receives a license encrypted for distribution from the license distribution server 150.

The seed producing/storing unit 121 produces and stores a seed to be used for producing a license encryption key for encrypting a license at the time of distribution.

The encryption conversion unit 122 converts the encryption of a content by an encrypting method unique to the user terminal 100 based on the encrypted content for distribution received by the content receiving unit 112 and the license received by the license receiving unit 113. (Hereinafter, the resulting content will be referred to as " encrypted content for storing".)

The data storing unit 130 stores an encrypted content for distribution, an encrypted license for distribution, an encrypted content for storing and the like. The data storing unit 130 corresponds to a hard disk drive when the user terminal 100 is a PC and an external storage medium such as a memory card when the user terminal is a content recording/reproducing device other than a PC.

The process control unit 114 controls processing over various unit.

The content distribution server 140 distributes contents and includes content obtaining request receiving unit 141, content storing unit 142, and content distribution unit 143.

The content obtaining request receiving unit 141 receives a content obtaining request from the user terminal 100.

The content storing unit 142 stores an encrypted content for distribution.

The content distribution unit 143 distributes the encrypted content for distribution stored in the content storing unit 142 in response to the content obtaining request received by the content obtaining request receiving unit 141.

The license distribution server 150 distributes licenses and includes license obtaining request receiving unit 151, license storing unit 152, license encrypting unit 153, and license distribution unit 154.

The license obtaining request receiving unit 151 receives a license obtaining request from the user terminal 100.

The license storing unit 152 stores license data.

The license encrypting unit 153 encrypts the license stored in the license storing unit 152 for use as one for distribution.

The license distribution unit 154 distributes the license encrypted for distribution by the license encrypting unit 153 to the user terminal 100.

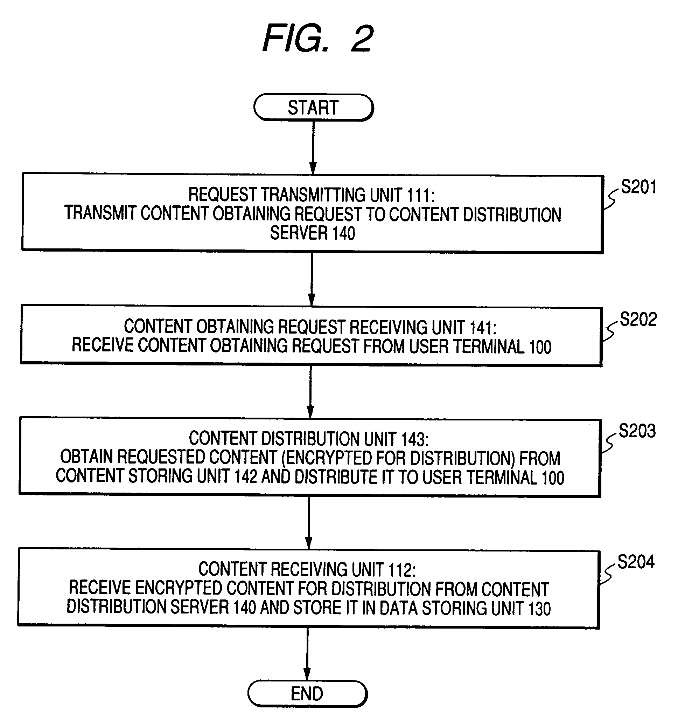

The digital content distribution processing according to the embodiment will be described by referring to a specific example. In the digital content distribution processing according to the embodiment, the user terminal 100 obtains a content. Fig. 2 is a flowchart for use in illustration of a content obtaining sequence according to the first embodiment.

In step S201, a content obtaining request is transmitted to the content distribution server 140 by the request transmitting unit 111 in the user terminal 100. Herein, the content obtaining request includes a content ID uniquely allocated for each content distributed in the digital content distribution system according to the embodiment. In the following description of the example, assume that a request for obtaining a content with content ID = "C00001" is transmitted.

In step S202, the content obtaining request from the user terminal 100 is received by the content obtaining request receiving unit 141 in the content distribution server 140.

In step S203, the content corresponding to the content ID included in the content obtaining request received in step S202 is obtained from the content storing unit 142 by the content distribution unit 143, and the obtained content is distributed to the user terminal 100. In this example, the content ID of the requested content is "C00001" and therefore the content corresponding to the ID is distributed. Note that contents stored in the content storing unit 142 have encryption for distribution provided in advance so that they cannot be unlawfully copied or tampered in the distribution path. The title key for the encryption for distribution is stored by the license storing unit 152 in the license distribution server 150 in association with the content ID. Note that details of data stored in the license storing unit 152 will later be described.

In step S204, the encrypted content for distribution distributed from the content distribution server 140 is received by the content receiving unit 112 in the user terminal 100 and stored in the data storing unit 130.

This is how the content obtaining sequence proceeds according to the embodiment, while the user terminal 100 obtains the content and then obtains the license necessary for using the content.

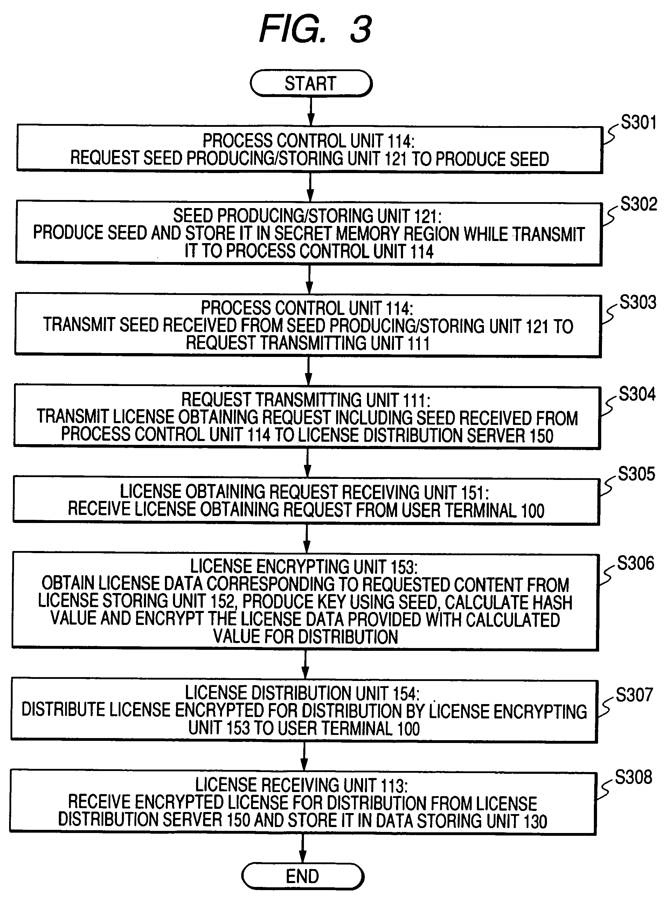

Fig. 3 is a flowchart for use in illustration of the license obtaining sequence according to the first embodiment.

In step S301, the process control unit 114 in the user terminal 100 requests the seed producing/storing unit 121 to produce a seed necessary for producing a license encryption key to be used for encrypting the license when the license distribution server 150 distributes the license to the user terminal.

In step S302, the seed producing/storing unit 121 produces a seed and stores the seed in its memory region and the seed value is transmitted to the process control unit 114. The seed value produced in this example is a value randomly produced with a random number generating function. In the following description of the example, the produced seed is an 8-byte value "0x1049383764843278". The memory region that stores the produced seed value is a secrete memory region resistant to unauthorized access.

The random number generating function is generally a pseudo random number generator that is a random number sequence produced by calculation based on the seed value. The use of a random number generator independent of such a random number sequence and capable of producing irreproducible values is more preferable.

According to the embodiment, the seed is an 8-byte value randomly produced by a random number generation function, but it does not have to an 8-byte value, and the seed value may be a function.

In step S303, the process control unit 114 transmits the seed received from the seed producing/storing unit 121 to the request transmitting unit 111 as it is.

In step S304, the request transmitting unit 111 transmits a license obtaining request to the license distribution server 150. Herein, the license obtaining request includes the content ID of a content whose license is to be obtained and the seed obtained in step S303. In the following description of the example, the license obtaining request including the content ID = "C00001" and the seed = "0x1049383764843278" is transmitted. Note that the content ID and the seed are only by way of example, and the byte length is not particularly limited.

In step S305, the license obtaining request receiving unit 151 in the license distribution server 150 receives the license obtaining request from the server terminal 100.

In step S306, the license encrypting unit 153 obtains license data corresponding to the content ID included in the license obtaining request received in step S305 and carries out calculation based on a predetermined algorithm for the seed included in the content obtaining request, and using the calculation result as a key, the obtained license data is encrypted. In this example, the content ID included in the license obtaining request is "C00001".

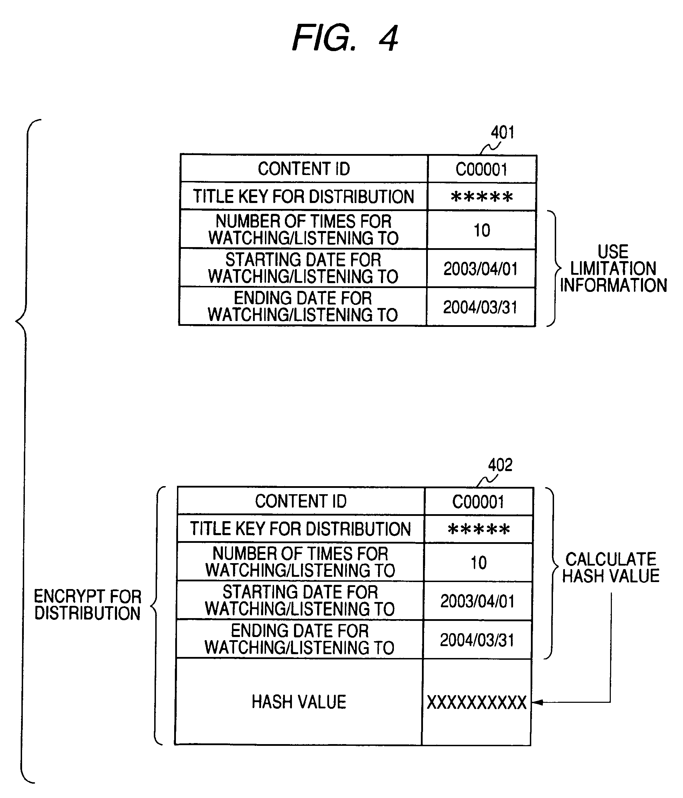

Fig. 4 shows at 401 an example of license data corresponding to the content ID = "C00001" stored in the license storing unit 152. As shown in Fig. 4 at 401, for the license data stored in the license storing unit 152, the title key for distribution used for encrypting the corresponding content for distribution and the use limitation information of the content are managed on the basis of a content ID. In this example, as the use limitation information, three kinds of use limitation are recorded and they are the number of times for watching/listening, the starting date for watching/listening, and the ending date for watching/listening. The number of times for watching/listening refers to the number of times the content file can be watched/listened to. The starting data for watching/listening is the first date when the content can be watched/listened to. The ending date for watching/listening is the final date when the content can be watched/listened to. Note that as shown in Fig. 4 at 401, these three kinds of use limitation are described according to the embodiment, while these are simply examples of the use limitation, and for example the number of times the content can be copied may be set as use limitation other than these kinds of limitation.

In Fig. 4 at 402, an example of encrypted license data is shown. In this example, at the time of encrypting a license, based on the license data 401 obtained from the license storing unit 152, a hash value is calculated using a hash function, and the value is added to the license data before encrypting. The hash value is used for verification on the side of the user terminal 100 at the time of decrypting the encrypted license for distribution.

The algorithm used to produce the key for the license data encryption based on the seed may be any expression as long as it can derive a unique value from a factor seed.

In step S307, the encrypted license for distribution produced in step S306 is distributed to the user terminal 100.

In step S308, the license receiving unit 113 in the user terminal 100 receives the encrypted license for distribution distributed from the license distribution server 150 and stores the received data in the data storing unit 130.

Note that in the license obtaining sequence according to the embodiment, the license distribution server 150 distributes the license to the user terminal 100 only if it is confirmed that the user has purchased the license by some way and paid for the price.

As described above, the content and license obtaining sequences have been described with reference to Figs. 2 and 3, the user terminal 100 according to the embodiment obtains the encrypted content for distribution and the encrypted license for distribution, then decrypts the encryption for distribution of the content and the license, and carries out encryption conversion to the content and license according to the encrypting method unique to the user terminal. Herein, even if a malicious user steals a title key for distribution to decrypt a certain encrypted content for distribution and lets the title key be publicly known on the Internet, the encryption conversion is carried out in order to prevent contents already stored in the data storing unit 130 of a large number of user terminals 100 from being unlawfully stolen. Since the content after the encryption conversion is encrypted with another key different from that used at the time of distribution and stored in the user terminal, the content cannot be decrypted using the leaked title key for distribution. The title key for distribution of the content is converted to another key and re-encrypted on the side of the content distribution server 140 and the license distribution server 150, and then the content and the license to be distributed are adapted to the new title key for distribution, so that the leaked title key for distribution can be invalidated.

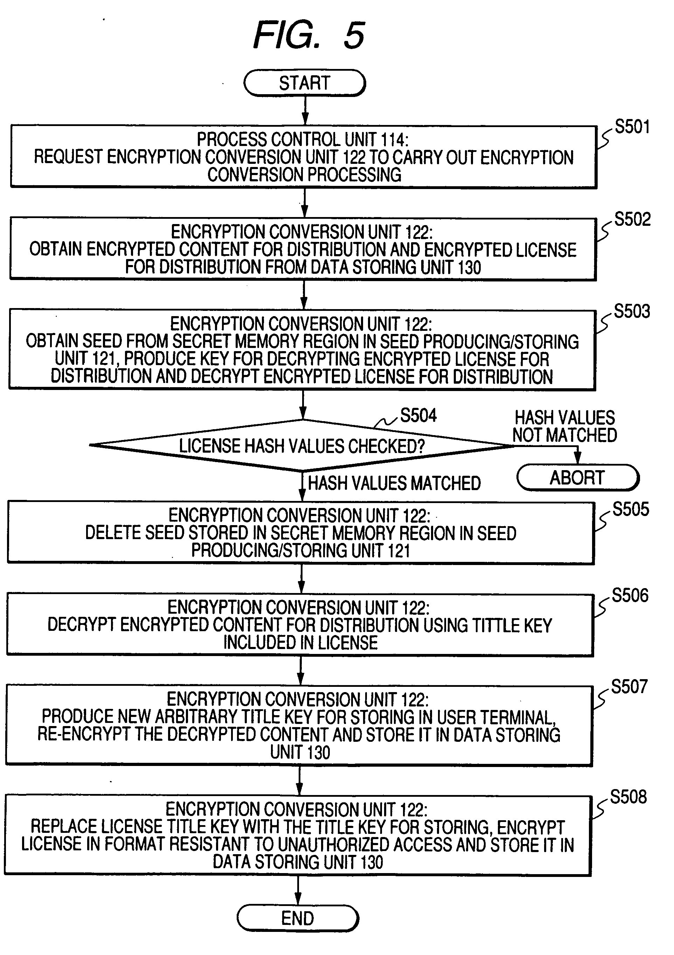

Fig. 5 is a diagram showing an encryption conversion sequence according to the first embodiment.

In step S501, the process control unit 114 in the user terminal 100 requests the encryption conversion unit 122 to carry out encryption conversion.

In step S502, the encryption conversion unit 122 obtains an encrypted content for distribution and an encrypted license for distribution from the data storing unit 130. Here, the encrypted content for distribution to be obtained is data stored by the content receiving unit in step S204, and the encrypted license for distribution is data stored in step S308.

In step S503, the encryption conversion unit 122 obtains a seed stored in the secret memory region of the seed producing/storing unit 121, carries out calculation to the seed according to a predetermined algorithm, and decrypts the encrypted license for distribution obtained in step S502 using the calculation result as a key. The seed to obtain from the secrete memory region of the seed producing/storing unit 121 is a value produced/stored in step S302, and in the example, it is "0x1049383764843278". The algorithm used to produce the key for decrypting the encrypted license data for distribution is the same algorithm used by the license encrypting unit 153 in the license distribution server 150 in step S306 to produce the key for encrypting the license data based on the seed included in the license obtaining request transmitted from the user terminal 100.

In step S504, a hash value is calculated based on the content ID, the title key for distribution, and the use limitation information in the decrypted license data, and compared to the hash value included in the decrypted license data. If the hash values do not match, it is determined that the distribution encryption for the license has not been decrypted correctly, and the process is interrupted. If the hash values match, the process proceeds to step S505.

In step S505, the encryption conversion unit 122 deletes the seed stored in the secret memory region of the seed producing/storing unit 121.

In step S506, the encryption conversion unit 122 decrypts the encrypted content for distribution obtained in step S502 using the title key for distribution included in the license decrypted in step S503.

In step S507, the encryption conversion unit 122 produces a new arbitrary title key for storing in the user terminal, re-encrypts the content decrypted in step S506 and stores the content in the data storing unit 130. Note that the new title key may be produced by various methods such as using a random number generating function, and the method is not specified herein.

In step S508, the encryption conversion unit 122 replaces the part of the title key for distribution of the license data decrypted in step S503 with the title key for storing in the user terminal produced in step S507 and the data is encrypted in a format resistant to unauthorized access and stored in the data storing unit 130.

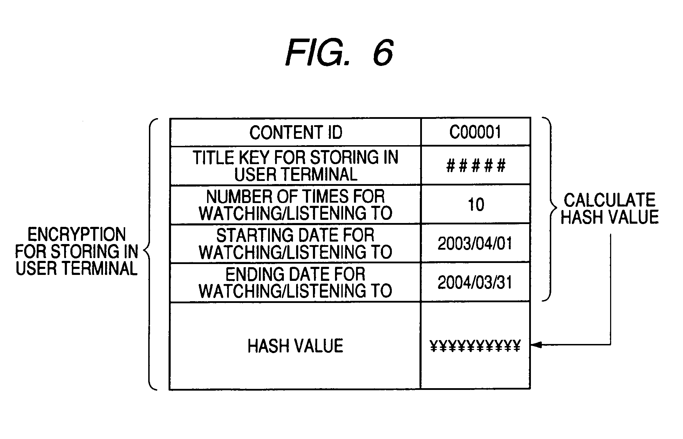

Fig. 6 shows an example of license data for storing in the user terminal in the example. Herein, the value of the title key is replaced by the title key for storing in the user terminal and then a new hash value is calculated. The license data is provided with the calculated value and then encrypted for storing in the user terminal.

Based on a value unique to the user terminal (such as the ID of the CPU) or the date when the license data file is produced, data may be encrypted using the value produced by a predetermined algorithm as a key, so that the data can be encrypted in a format resistant to unauthorized access. The key for encryption is produced based on a value unique to the user terminal, so that license data cannot unlawfully be used if the license data is unlawfully copied from the user terminal to another user terminal because the user terminal specific ID is different from that on the side trying to copy the data, and the same key cannot be produced. Similarly, the key for encryption is produced based on the date of producing the license data file, the same key cannot be produced if the license data is unlawfully copied in the user terminal because the date of producing the copied license data file is different from the date of producing the original license data file. Consequently, unauthorized use of the license data is impossible.

When the content and the license are stored in the data storing unit 130 after encryption conversion, they can be associated in various ways such as by storing the content and the license in the same file and by storing the content and the license in different files and storing an ID to specify the corresponding license in the content file.

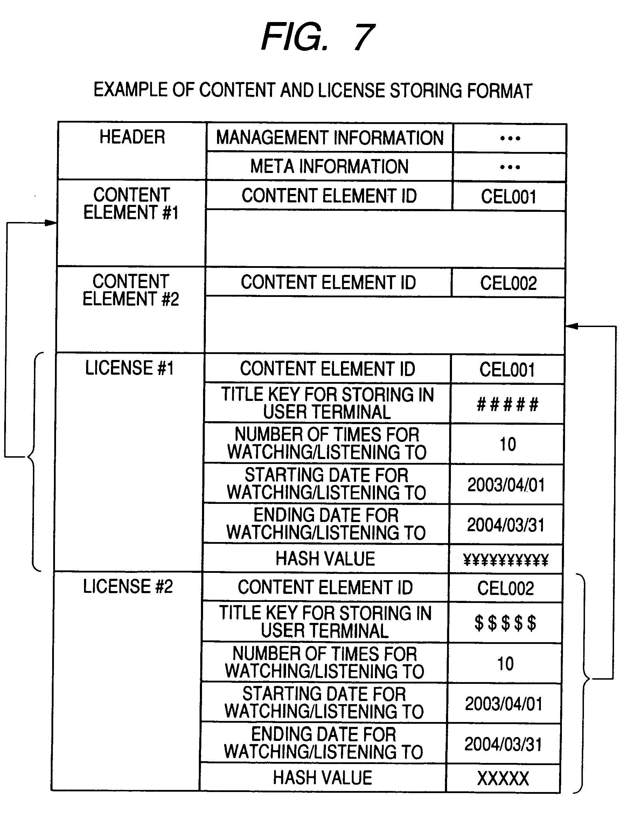

Fig. 7 shows a content and license storing file format to store the content and the license in the same file in a method of establishing content-license association by way of illustration. The format includes a header for various management information and meta information, content elements constituting a content, and a license corresponding to the content element. Content element IDs are allocated to the content elements, and by storing the content element ID of a corresponding element for each license, the association between the content and the license is established.

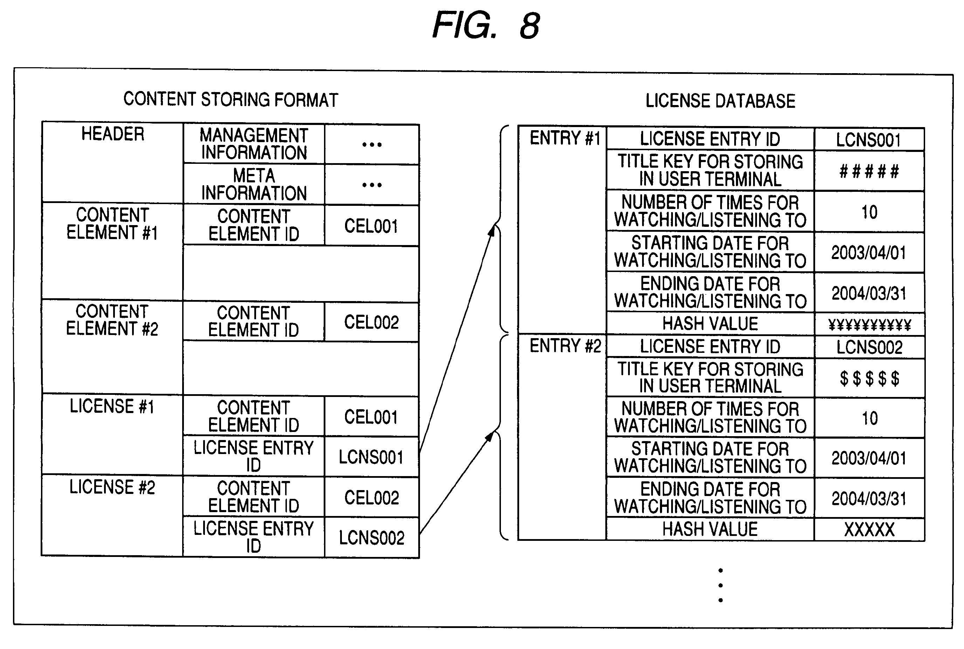

Fig. 8 shows an example of a content storing format and a license database in a method of establishing content-license association when the content and the license are stored in different files and the ID to specify the corresponding license is stored in the content file. As shown in Fig. 8, the method is different from that shown in Fig. 7 in that a license entry ID to specify a license entry is stored in the license area of the content storing format rather than the license data itself, and is associated with a license entry ID allocated to each entry in the license database. Note that the shaded part in Figs. 7 and 8 shows a data region to be encrypted.

In steps S503 and S506, the content and license in a non-encrypted state temporarily exist, but these are safely stored in the secret memory region of the encryption conversion unit 122.

After the encryption conversion processing is complete, the content for storing in the user terminal stored in the data storing unit 130 is available to be performed based on the license data for storing in the user terminal.

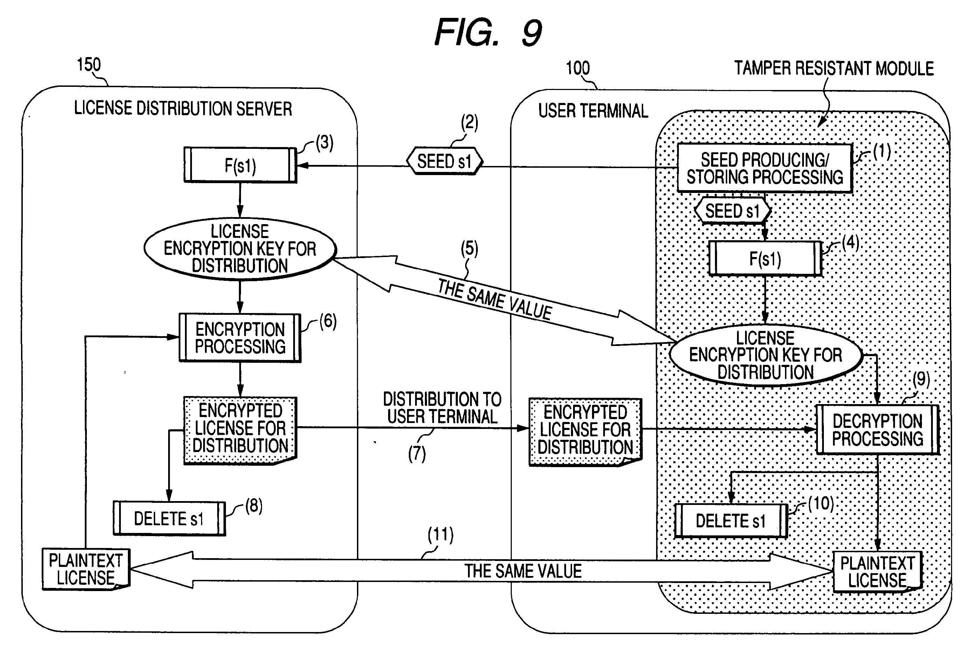

Fig. 9 is a diagram of the concept of how a license is securely distributed from the license distribution server 150 to the user terminal 100 according to the first embodiment of the invention.
(1) On the side of the user terminal 100, the seed S1 is generated.
(2) The seed S1 generated in (1) is included in a content obtaining request and transmitted to the license distribution server 150.
(3) The license distribution server 150 generates a license encryption key for distribution based on a predetermined algorithm (a prescribed function F in this example).
(4) Meanwhile, on the side of the user terminal 100, the seed S1 the same as that generated in (1) is applied to the algorithm used by the license distribution server 150 in (3).
(5) By the process from (1) to (4), the same license encryption key for distribution can be produced on the side of license distribution server 150 and on the side of the user terminal 100.
(6) Using the license encryption key for distribution generated in (3), the license distribution server 150 encrypts the license of the content specified in (2).
(7) The encrypted license generated in (6) is transmitted to the user terminal 100.
(8) The license distribution server 150 deletes the seed S1 received in (2) after the processing in (7) .
(9) Meanwhile, the user terminal 100 receives the encrypted license transmitted in (7) and the encrypted license is decrypted using the license encryption key for distribution generated in (4).
(10) After the decryption processing in (9), the user terminal 100 deletes the seed S1 generated in (1).
(11) By the process from (1) to (10), a plaintext license having the same value as a plaintext license owned by the license distribution server 150 can be obtained at the user terminal.

In this way, the license can be transmitted securely by common-key method at the time of distribution.

At this point, if the function F on the user terminal side is known to a malicious user, the user could calculate to obtain the license encryption key for distribution, and the encrypted license data could be decrypted using the calculated license encryption key for distribution, so that the license could unlawfully be copied. According to the invention, however, the function F on the user terminal side and the decryption processing are protected by the use of a tamper resistant module.

Note that the value of the seed S1 itself could be intercepted or copied by a malicious user since it exits the tamper resistant module once for transmission to the license distribution server 150. According to the invention, however, the function F is protected by the use of the tamper resistant module and a license encryption key for distribution cannot be generated outside the tamper resistant module. In the encryption conversion sequence, when the encryption conversion unit 122 in the tamper resistant module is requested to carry out encryption conversion, a seed value is not provided from outside the tamper resistant module, but a seed stored in the secret memory region in the tamper resistant module is used, and the memory stored in the secret memory region is deleted once encryption conversion is carried out, so that the seed is valid only once and thus the security is ensured.

As in the foregoing, according to the embodiment, in the digital content distribution system including the content distribution server, the license distribution server, and the user terminal, the user terminal includes the seed producing/storing unit for producing and storing a seed for producing a license encryption key for distribution to be used to encrypt a license at the time of distribution and the encryption conversion unit for carrying out encryption conversion to the content and the license based on the encrypted content for distribution and the encrypted license for distribution according to an encryption method unique to the user terminal. The license distribution server includes the license encrypting unit for producing a key based on a seed included in a license obtaining request and a predetermined algorithm and encrypting the key for distributing the license data. In this structure, based on the seed produced on the user terminal side, the license encryption key for distribution is produced by the license distribution server using the prescribed function F. On the user terminal side, the same license encryption key for distribution as that on the license distribution server side is produced using the same seed and the same function F, so that the license is securely transmitted by the common-key method at the time of distribution, and the seed stored by the seed producing/storing unit is deleted by the user terminal once the license is decrypted. In this way, if a malicious user unlawfully copies the encryption license for distribution in the distribution path or on the user terminal, seed information necessary for decrypting the encryption license for distribution is deleted once the encryption conversion is carried out to the content and license. Therefore, the re-use of the copied license can be prevented.

At the user terminal, the seed producing/storing unit and the encryption conversion unit are formed into a tamper resistant module by software, and the other user interface part and the like are not made tamper resistant. In this way, the person hours necessary for development may efficiently be applied, and the tamper resistant module can commonly be used by a plurality of applications. Note that in this structure, the security of the encryption license for distribution can be ensured by the method according to the embodiment.

At the user terminal 100, the content is subjected to encryption conversion processing from the encryption for distribution to the one for storing in the user terminal. Therefore, if a malicious user acquires and leaks a key for decrypting the encryption for distribution of a certain content, damages by the theft of the key to the right of the copyright owner can be as small as possible because the content is not affected once its encryption is converted for storing in the user terminal.

The above description of the embodiment is on a one content to one file basis, but one content may include multiple files for example as document data described in the HTML format. In this case, in the license to be distributed, a set of a plurality of title keys and use control information are encrypted by a license encryption key for distribution.

In the above description of the embodiment, there is one to one correspondence between the contents and the licenses, but there may be a content distribution system in which for the same content, a license allowing ten-time performance and a license allowing twenty-time performance may be sold at different prices. In this case, in the license obtaining sequence, a license ID uniquely allocated to a license rather than the content ID is included in a license obtaining request, and data stored in the license storing unit 152 is managed on the basis of the license ID rather than on a content ID basis, so that the same advantages as those of the embodiment can be provided.

In the above description of the embodiment, a content is obtained, and then its license is obtained, but the license may be obtained before obtaining the content and then encryption conversion may be carried out as long as the content and the license are obtained before the encryption conversion sequence.

In the above description of the embodiment, the tamper resistant module 120 at the user terminal 100 is a module made tamper resistant by software, but the module may be made tamper resistant by hardware. In this case, the function of the tamper resistant module 120 may be implemented by an external secure device provided separately from the user terminal 100.

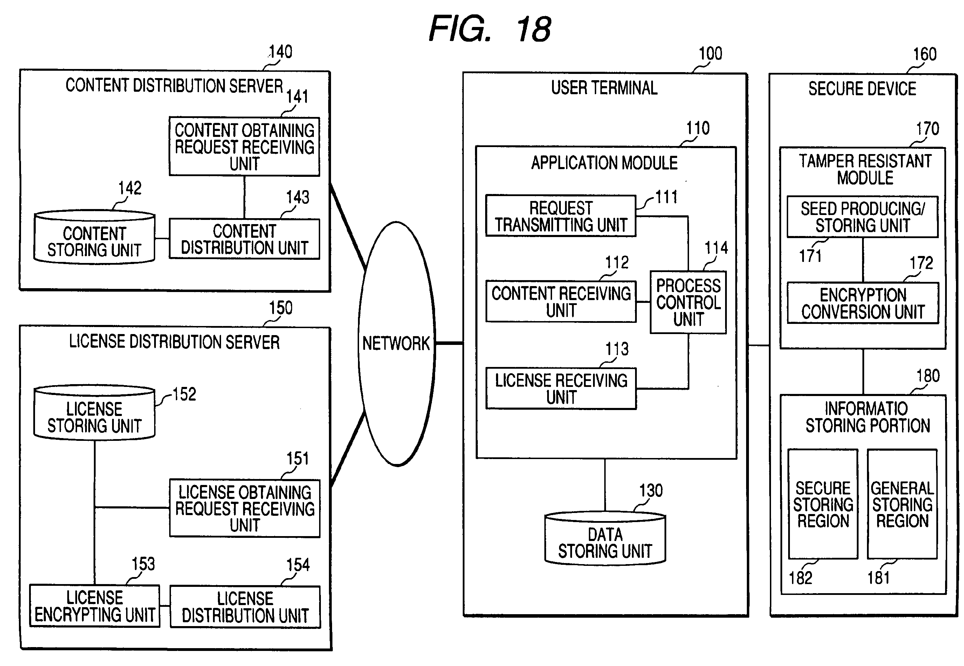

Fig. 18 is a diagram of a digital content distribution system with an external secure device. The secure device 160 includes a tamper resistant module 170 that cannot be read/written to/from the outside except for a specifically permitted path and an information storing portion 180. More specifically, the tamper resistant module 170 is made of tamper resistant hardware having tamper resistance. Seed producing/storing unit 171 and encryption conversion unit 172 operate similarly to the seed producing/storing unit 121 and the encryption conversion unit 122, respectively in Fig. 1. The information storing portion 180 includes a general storing region 181 and a secure storing region 182. The general storing region 181 is accessible from the outside with no special permission. The secure storing region 182 is a secure region only accessible through the tamper resistant module 170. A seed produced by the seed producing/storing unit 171 may be stored in the memory region of the seed producing/storing unit 171 itself or/and in the secure storing region 182 of the information storing portion 180. Regarding how to store the encryption-converted content and license, there may be the following options.
(a) The content and license may both be stored in the data storing unit 130 in the user terminal 100.
(b) The content may be stored in the data storing unit 130 in the user terminal 100, while the license may be stored in the secure storing region 182 of the secure device 160.
(c) The content may be stored in the general storing region 181 of the secure device 160, while the license may be stored in the secure storing region 182 of the secure device 160.

Note that the embodiment may be implemented by allowing a computer to load a program.

### (Second Embodiment)

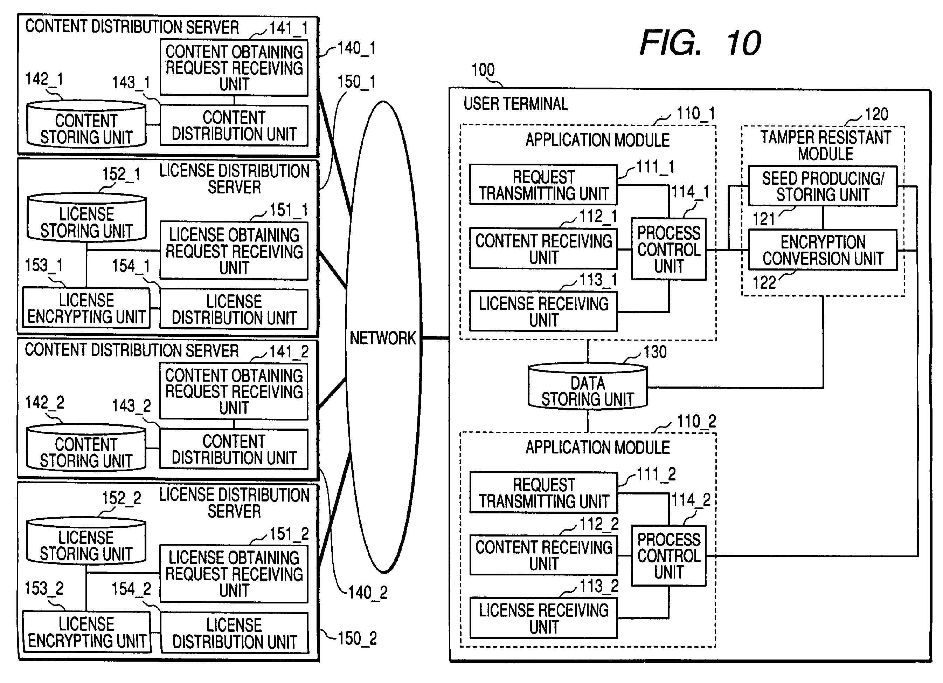

Now, a second embodiment of the invention will be described. As shown in Fig. 10, the structure of a digital content distribution system according to the second embodiment is different from the first embodiment (Fig. 1) in that there are a plurality of content distribution servers and license distribution servers, and there are a plurality of application modules in the user terminal 100. According to the second embodiment, the method of managing seeds stored in the seed producing/storing unit 121 in the license obtaining sequence and information transmitted by the process control unit 114 to the encryption conversion unit 122 at the time of making a request for encryption conversion in the encryption conversion sequence are different from those according to the first embodiment.

Now, the digital content distribution processing according to the second embodiment will be described. In the following description, an application module 110_1 is an application module for music distribution, a content distribution server 140_1 is a music content distribution server, and a license distribution server 150_1 is a music content license distribution server. An application module 110_2 is an application module for video distribution, a content distribution server 140_2 is a video content distribution server, and a license distribution server 150_2 is a video content license distribution server.

In the content obtaining sequence according to the second embodiment, the application module for music distribution 110_1 obtains a music content from the music content distribution server 140_1, and the application module for video distribution 110_2 obtains a video content from the video content distribution server 140_2. Note that details of the content obtaining sequence are the same as the processing shown in Fig. 2 according to the first embodiment and therefore no further description will be provided about them.

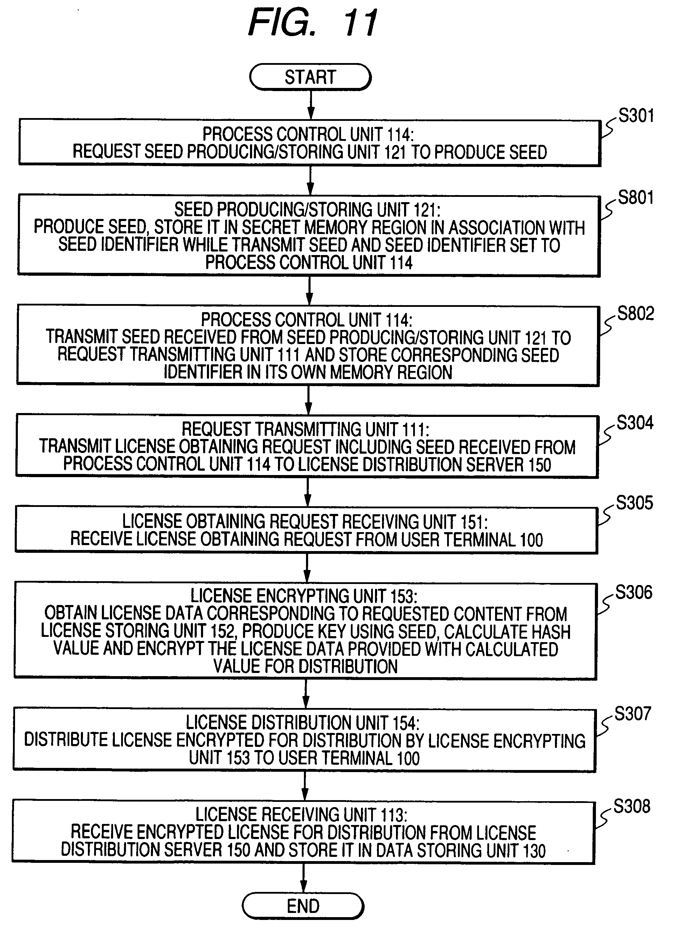

Now, the license obtaining processing sequence according to the second embodiment will be described with reference to Fig. 11. In the following example, assume that the application module for music distribution 110_1 obtains a license.

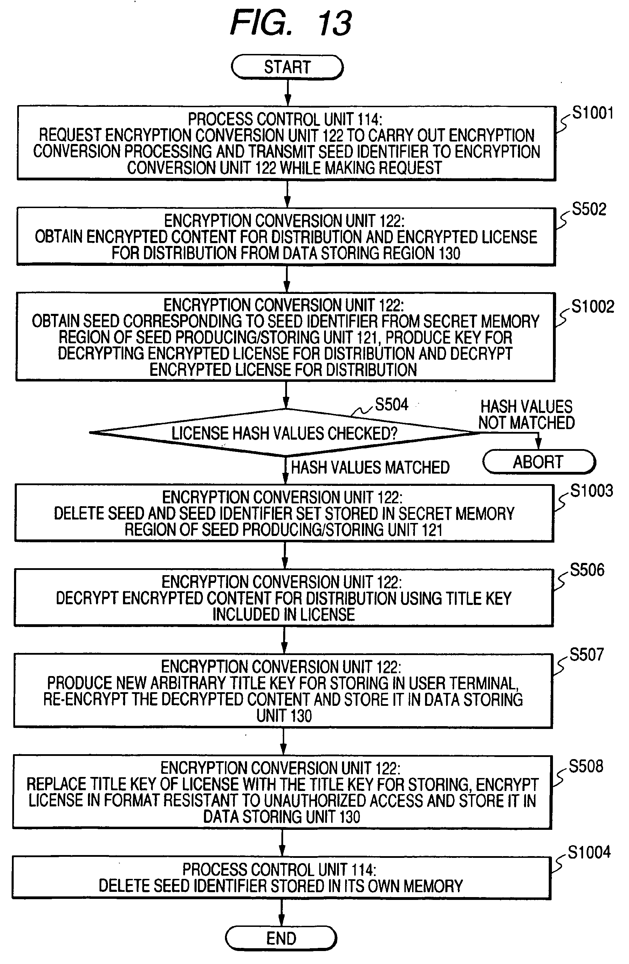

Note that in the following description of the sequence according to the second embodiment shown in Figs. 11 and 13, various kinds of unit included in the application module and the license distribution server are denoted by a three-digit number like "XXX" and the numerals do not explicitly tell whether each unit is for music distribution or video distribution. Meanwhile, for example "XXX_1" made of a three-digit number plus the suffix "_1" is for music distribution related processing. Similarly, unit whose reference numeral has the suffix "_2" is for video distribution related processing.

Step S301 is the same as step S301 according to the first embodiment and therefore no further description will be provided about it.

In step S801, the seed producing/storing unit 121 produces seeds and seed identifiers for identifying the seeds, stores the seeds and the seed identifies in association with one another in the form of a seed identifier association table in its secret memory region and transmits sets of the seeds and the seed identifiers to the process control unit 114.

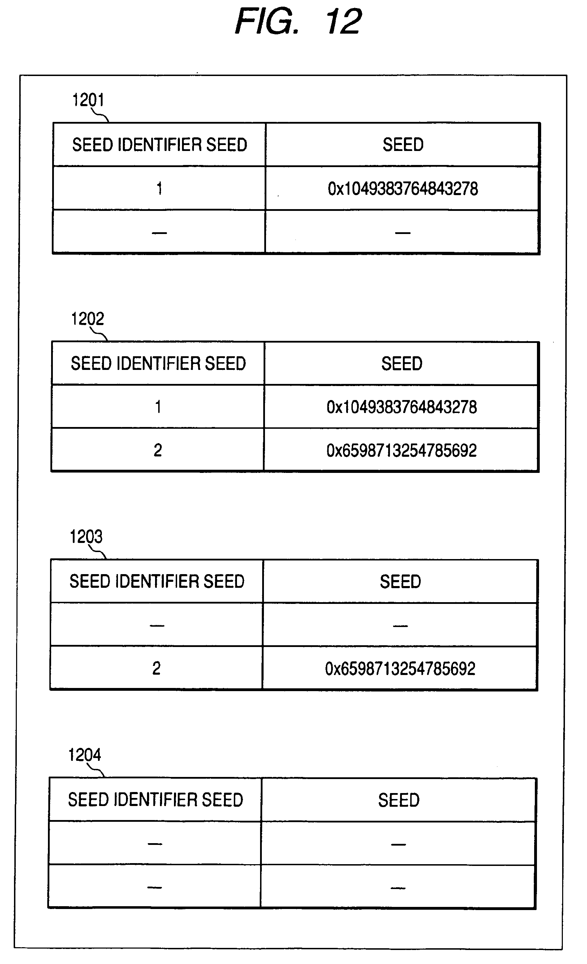

Fig. 12 shows at 1201 an example of the association table for a seed and a seed identifier to be stored in the secret memory region by the seed producing/storing unit 121 when the application module for music distribution 110_1 makes a seed producing request. According to the first embodiment, the seed producing/storing unit 121 produces/stores only one seed, but according to the second embodiment, seeds are managed in the data structure as shown in Fig. 12, and therefore a plurality of seeds can be stored.

In step S802, the process control unit 114 transmits the seed received from the seed producing/storing unit 121 as it is to the request transmitting unit 111 and stores a corresponding seed identifier in its memory region.

The process from steps S304 to S308 is the same as the process from steps S304 to S308 according to the first embodiment and therefore no further description will be provided about it.

Now let us assume that when the application module for music distribution 110_1 finishes making the seed producing request and is obtaining a license from the music content license distribution server, another application module for video distribution 110_2 starts a license obtaining sequence. The application module for video distribution 110_2 obtains a license according to the sequence shown in Fig. 11 as with the application module for music distribution 110_1. In this stage, an association table for a seed and a seed identifier stored in the secret memory region of the seed producing/storing unit 121 is as shown at 1202 in Fig. 12. The seed corresponding to "seed idnetifer=1" is a seed produced for the application module for music distribution 110_1, the seed corresponding to "seed identifier=2" is a seed produced for the application module for video distribution 110_2, and the table stores a plurality of seeds.

Now, the content and license encryption conversion sequences according to the second embodiment of the invention will be described with reference to Fig. 13. Assume that in the following example, the application module for music distribution 110_1 carries out encryption conversion to a license first.

In step S1001, the process control unit 114 of the user terminal 100 transmits an encryption conversion request and a seed identifier to the encryption conversion unit 122. The seed identifier then transmitted to the encryption conversion unit 122 is a seed identifier stored in step S802 at the time of obtaining a license corresponding to a content requested for encryption conversion. In this example, the application module for music distribution 110_1 first carries out encryption conversion to the license, and therefore the seed identifier to be transmitted is 1 (seed identifier=1).

Step S502 is the same as step S502 according to the first embodiment and therefore no further description will be provided about it.

In step S1002, the encryption conversion unit 122 specifies and obtains a seed corresponding to the seed identifier transmitted from the process control unit 114 in step S1001 described above in the seed identifier association table stored in the secret memory of the seed producing/storing unit 121, and carries out calculation to the seed based on a predetermined algorithm. Using the result of calculation as a key, the encrypted license for distribution obtained in step S502 described above is decrypted. The algorithm used for producing the key for decrypting the encrypted license data for distribution based on the seed is the same as that used by the license encrypting unit 153 of the license distribution server 150 to produce the key for encrypting license data for the transmitted seed in step S306 described above.

Step S504 is the same as step S504 according to the first embodiment and therefore no further description will be provided about it.

In step S1003, the encryption conversion unit 122 deletes the set of the seed and the corresponding seed identifier obtained from the secret memory region of the seed producing/storing unit 121 in step S1002 from the above described seed identifier association table.

In this example, by the license encryption conversion processing by the application module for music distribution 110_1, the set corresponding to "seed identifier=1" is deleted from the state shown at 1202 in Fig. 12, and only the set corresponding to "seed identifier=2" remains as shown at 1203 in Fig. 12.

The process from steps S506 to S508 is the same as the process from steps S506 to S528 according to the first embodiment and therefore no further description will be provided about it.

In step S1004, the process control unit 114 deletes the seed identifier stored by the process control unit 114 in step S802.

Now, assume that after the license encryption conversion processing by the application module for music distribution 110_1, the application module for video distribution 110_2 carries out encryption conversion to a license. The application module for video distribution 110_2 carries out encryption conversion processing to the license according to the sequence as shown in Fig. 13 as with the application module for music distribution 110_1. As a result, in the association table for seeds and seed identifiers stored in the secret memory region of the seed producing/storing unit 121, the set corresponding to "seed identifier=2" is deleted from the state shown at 1203 in Fig. 12, and therefore there is no data stored as shown at 1204 in Fig. 12.

Note that in the above description of the embodiment, licenses are distributed between one user terminal and multiple license distribution servers.

As described above, according to the embodiment, in the license obtaining sequence, the seed producing/storing unit 121 stores a seed and a seed identifier in association in its secret memory region, while the process control unit 114 stores the seed identifier in its memory region and transmits the seed identifier to the encryption conversion unit 122 at the time of making a request for encryption conversion. The encryption conversion unit 122 uses the seed corresponding to the received seed identifier to decrypt the encrypted license for distribution. In this way, a plurality of seeds can be managed in the tamper resistant module 120, and for example an application module for music distribution and an application module for video distribution can share the tamper resistant module 120 on the same user terminal, so that license obtaining processing and encryption conversion processing can be carried out in parallel.

Furthermore, a certain application module can be formed into multiple threads, requests for obtaining a plurality of licenses may be made in parallel to the license distribution servers and thus the licenses may efficiently be obtained.

In this case, it is assumed that the licenses may be distributed in a sequence different from the sequence in which the user has made the license obtaining requests to the plurality of license distribution servers. At the time, if only a seed is included in each license obtaining request from the user terminal, the user terminal might not be able to determine which seed among the plurality of seeds stored by the user terminal should be used to decrypt encrypted licenses for distribution transmitted from the license distribution servers.

Therefore, a seed identifier is included in a license obtaining request in addition to a seed, and the license distribution server transmits an encrypted license for distribution as well as the seed identifier of the seed used to encrypt the license, so that the user terminal can obtain a corresponding seed by referring to the seed identifier association table based on the seed identifier additionally included in the encrypted license for distribution.

Note that according to the embodiment, the function of the tamper resistant module 120 can be implemented as an external secure device separately from the user terminal 100.

Note that the embodiment may be implemented by allowing a computer to load a program.

### (Third Embodiment)

Now, a third embodiment of the invention will be described. The structure of a digital content distribution system according to the third embodiment is not different from the first embodiment (Fig. 1). Note however that in the license obtaining sequence, a seed produced by the seed producing/storing unit 121 is not only stored in the secret memory region but also encrypted in a format resistant to unauthorized access and stored in the data storing unit 130.

Now, the digital content distribution processing according to the third embodiment will be described. The content obtaining sequence according to the third embodiment is the same as the processing shown in Fig. 2 according to the first embodiment and therefore no further description will be provided about it.

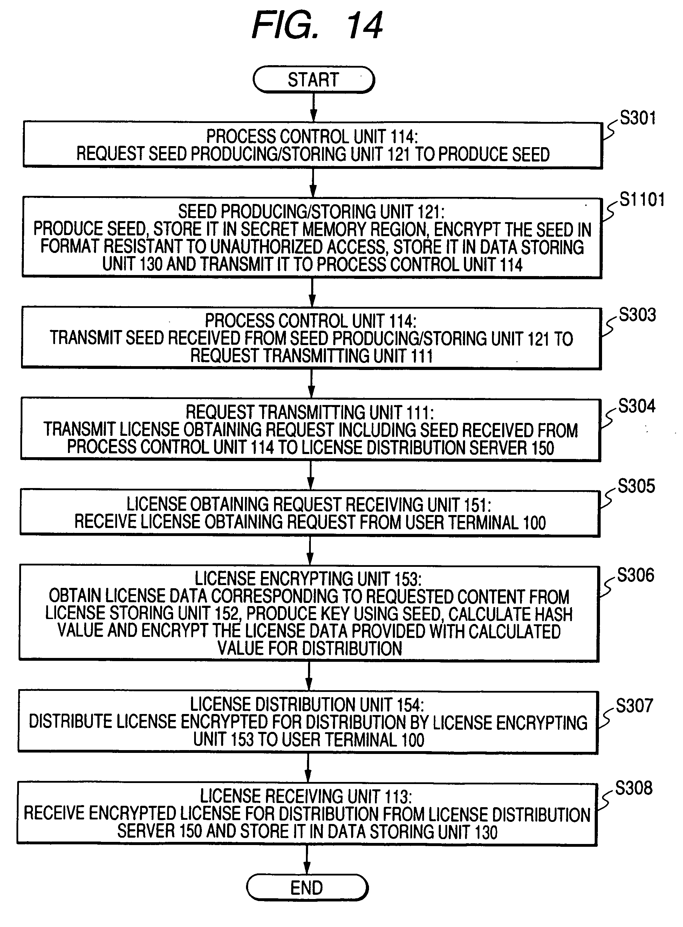

Now, the license obtaining processing sequence according to the third embodiment will be described with reference to Fig. 14.

Step S301 is the same as step S301 according to the first embodiment and therefore no further description will be provided about it.

In step S1101, the seed producing/storing unit 121 produces a seed, stores the seed in its secret memory region, encrypts the seed in a format resistant to unauthorized access and stores it in the data storing unit 130. (Hereinafter, this will be referred to as "seed backup file".) The seed is also transmitted to the process control unit 114. Herein, the seed may be "encrypted in a format resistant to unauthorized access" by the method the same as the method of encrypting license data to be stored in the user terminal in step S508 according to the first embodiment.

The process from steps S303 to S308 is the same as the process from steps S303 to S308 according to the first embodiment, and therefore no further description will be provided about it.

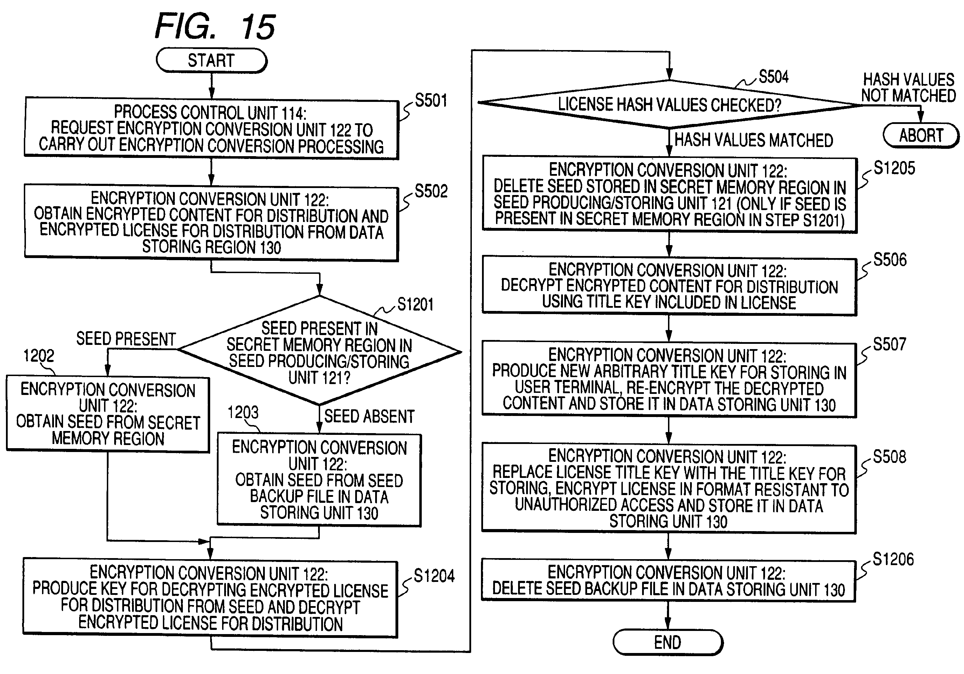

Now, the content and license encryption conversion sequences according to the third embodiment will be described with reference to Fig. 15.

The process in steps S501 and S502 is the same as the process in step S501 and S502 according to the first embodiment and therefore no further description will be provided about it.

In step S1201, the encryption conversion unit 122 checks whether or not a seed is stored in the secret memory region of the seed producing/storing unit 121. If a seed is stored, the process proceeds to step S1202 and otherwise the process proceeds to step S1203.

In step S1202, the encryption conversion unit 122 obtains the seed from the secret memory region of the seed producing/storing unit 121.

In step S1203, the encryption conversion unit 122 obtains the seed from the seed backup file in the data storing unit 130.

In step S1204, calculation is carried out to the obtained seed according to a predetermined algorithm, and using the calculation result as a key, the encrypted license for distribution obtained in the step S502 is decrypted.

The process in step S504 is the same as the process in step S504 according to the first embodiment and therefore no further description will be provided about it.

In step S1205, the encryption conversion unit 122 deletes the seed stored in the secret memory region of the seed producing/storing unit 121 only if there is a seed in the secret memory region based on the result of checking in step S1201.

The process from steps S506 to S508 is the same as the process from step S506 to S508 and therefore no further description will be provided about it.

In step S1206, the encryption conversion unit 122 deletes the seed backup file stored in the data storing unit 130.

In this way, according to the embodiment, in the license obtaining sequence, the seed produced by the seed producing/storing unit 121 is not only stored in the secret memory region but also encrypted in a format resistant to unauthorized access and stored as the seed backup file in the data storing unit 130. Then, if no seed is stored in the secret memory region of the seed producing/storing unit 121 in the encryption conversion sequence, the seed is obtained from the seed backup file and the encrypted license for distribution can be decrypted. According to the first embodiment, it is possible that if the application ends inadvertently by power failure or an operation mistake by the user during the period from when the license is obtained at the user terminal 100 to when the encryption conversion ends, the seed stored in the secret memory region of the tamper resistant module 120 may be deleted. In this case, it is possible that the user can no longer use the legally purchased license and thus cannot use the purchased content. However, according to this embodiment, the seed backup file can be used to address such an unexpected situation.

Note that in the description of this embodiment, in addition to the method of implementing the first embodiment, the seed backup file is provided. Meanwhile, according to the second embodiment, a seed identifier association table that describes the association between a seed and a seed identifier may be stored in the form of a seed backup file when the seed is produced, and the seed association table may be obtained from the secret memory of the encryption conversion unit 122 if the association table is stored in the memory and otherwise from the backup file. At the end of the encryption conversion sequence, the entry of the seed and seed identifier can be deleted, so that the same effect can be provided.

Note that according to the embodiment, the function of the tamper resistant module 120 may be implemented using an external secure device provided separately from the user terminal 100.

Note that the embodiment may be implemented by allowing a computer to load a program.

In the first to third embodiments, the "user terminal including a tamper resistant module" specifically refers to a PC, a PDA, a mobile phone or the like in which software that implements tamper resistance is installed. The "external secure device" detachably provided to the user terminal may be a smart card having a CPU and a memory region in a tamper resistant module or a secure memory card including an internal CPU that controls access to the tamper resistant region and a tamper resistant mass capacity storage region.

Note that the external secure device does not have to be detachable from the user terminal. The device may be in a form that is not in direct contact with the user terminal such as the form of a contactless smart card.

As in the forgoing, the invention has been described in detail with reference to the specific embodiments, while it should be apparent to a person skilled in the art that various modifications and changes can be provided without departing from the sprit and scope of the invention. This application is based on Japanese Patent Application No. 2003-160260 filed on June 5, 2003, the content of which is incorporated herein by reference.

### <INDUSTRIAL APPLICABILITY>

As described above, according to the invention, in the digital content distribution system including a content distribution server, a license distribution server, and a user terminal, the user terminal includes seed producing/storing unit for producing and storing a seed used to produce a license encryption key for distribution to be used for encrypting a license at the time of distribution and encryption conversion unit for carrying out encryption conversion to a content and a license by an encryption method unique to the user terminal based on an encrypted content for distribution and an encrypted license for distribution. The license distribution server includes license encrypting unit for producing a key using a seed included in a license obtaining request and a predetermined algorithm and encrypting license data for distribution. In this structure, the license encryption key for distribution is produced by the license distribution server using a prescribed function F based on the seed produced by the user terminal side. The user terminal side produces the same license encryption key for distribution as that on the side of the license distribution server using the same seed and the same function F, and transmits the result by the common-key method at the time of distributing the license. Then, the user terminal deletes the seed stored in the seed producing/storing unit once the license is decrypted. In this way, if a malicious user unlawfully copies the encrypted license for distribution in the distribution path or on the user terminal, the re-use of the copied license can be prevented because the seed information necessary for decrypting the encrypted license for distribution is deleted.

In addition, the seed producing/storing unit and the encryption conversion unit are formed into a tamper resistant module by software in the user terminal, and the other user interface part and the like are not made tamper resistant. Accordingly, the person hours can efficiently be applied and common-use of the tamper resistant module between a plurality of applications can be enabled.

A content is subjected to encryption conversion processing from the encryption for distribution to the one for storing in the user terminal. In this way, if a malicious user discovers and leaks a key for decrypting the encryption for distribution of the content, damages to the right of the copyright owner by the theft of the key can be as small as possible because the content after the encryption conversion for storing in the user terminal is not affected.

In the license obtaining sequence, the seed producing/storing unit 121 stores a seed and a seed identifier in association in its secret memory region, and the process control unit 114 stores the seed identifier in its memory region and transmits the seed identifier to the encryption conversion unit 122 at the time of requesting encryption conversion in the encryption conversion sequence. The encryption conversion unit 122 decrypts the encrypted license for distribution using the seed corresponding to the transmitted seed identifier, so that a plurality of seeds can be managed in the tamper resistant module 120. In this way, for example on the same user terminal, an application module for music distribution and an application module for video distribution can share the tamper resistant module 120, and license obtaining processing and encryption conversion processing can be carried out in parallel. A certain application module may be formed into multiple threads, and requests for obtaining a plurality of licenses can be made to the license distribution servers in parallel, so that the license obtaining process can be more efficient.

Furthermore, in the license obtaining sequence, a seed produced by the seed producing/storing unit 121 is not only stored in the secret memory region but also encrypted in a format resistant to unauthorized access and stored in the data storing unit 130 as a seed backup file, so that in the event the seed stored in the secret memory region is lost inadvertently, the seed backup file can be used to address the situation.

## Claims

1. A user terminal obtaining a license necessary for using a content from a license distribution server connected in an information transmittable manner, comprising:
a seed producing/storing unit which produces and stores a seed for producing an encryption key to be used by the license distribution server to encrypt a license;
a license receiving unit which receives a license encrypted using the encryption key produced by the license distribution server based on the seed; and
an encryption conversion unit which produces an encryption key based on the seed by the same method as that by the license distribution server and decrypting the encrypted license using the encryption key.

2. The user terminal according to claim 1,
wherein the seed producing/storing unit stores the seed in a secret memory resistant to unauthorized access in the seed producing/storing unit.

3. The user terminal according to claim 2, further comprising:
a data storing unit which stores the seed,
wherein the seed producing/storing unit encrypts the seed in a format resistant to unauthorized access and stores the seed in the data storing unit.

4. The user terminal according to claim 3,
wherein the encryption conversion unit obtains a seed from the secret memory when the seed is present in the secret memory and from the data storing unit when the seed is not present in the secret memory.

5. The user terminal according to any one of claims 2 to 4,
wherein the encryption conversion unit decrypts the encrypted license and then deletes the seed from the secret memory.

6. The user terminal according to any one of claims 1 to 5, further comprising:
a content receiving unit which obtains an encrypted content from the content distribution server connected in an information transmittable manner,
wherein the encryption conversion unit decrypts the encrypted content based on a title key for distribution included in the decrypted license, and then re-encrypts the license and content using a title key unique to a receiving terminal.

7. The user terminal according to claim 6,
wherein the encryption conversion unit re-encrypts the license and content and then deletes the seed stored in the data storing unit.

8. The user terminal according to claim 1,
wherein the seed producing/storing unit holds a seed identifier association table in which a seed and a seed identifier to identify the seed are associated with each other, and
wherein the encryption conversion unit specifies the seed used by the license distribution server for encrypting the license based on the seed identifier association table.

9. The user terminal according to claim 8,
wherein the seed producing/storing unit stores the seed identifier association table in a secret memory resistant to unauthorized access in the seed producing/storing unit.

10. The user terminal according to claim 9, further comprising:
a data storing unit which stores the seed identifier association table,
wherein the seed producing/storing unit encrypts the seed identifier association table in a format resistant to unauthorized access and stores the table in the data storing unit.

11. The user terminal according to claim 10,
wherein the encryption conversion unit obtains the seed identifier association table from the secret memory when the table is present in the secret memory and from the data storing unit when the table is not present in the secret memory.

12. The user terminal according to any one of claims 9 to 12,
wherein the encryption conversion unit deletes a seed and a corresponding seed identifier used by the license distribution server for encrypting a license from the seed identifier association table stored in the secret memory once the distributed license is decrypted.

13. The user terminal according to any one of claims 8 to 12, further comprising:
a content receiving unit which receives an encrypted content from the content distribution server connected in an information transmittable manner,
wherein the encryption conversion unit re-encrypts the license and content using a title key unique to a receiving terminal after decrypting the encrypted content based on the title key for distribution included in the decrypted license.

14. The user terminal according to claim 13,
wherein the encryption conversion unit deletes the seed and the seed identifier used for decrypting the license from the seed identifier association table stored in the data storing unit after the license and content are re-encrypted.

15. The user terminal according to any one of claims 1 to 14,
wherein the seed producing/storing unit and the encryption conversion unit are modules made tamper resistant by software.

16. The user terminal according to any one of claims 1 to 15, further comprising:
a request transmitting unit which transmits a license obtaining request to the content distribution server,
wherein the license obtaining request includes at least a seed to be used by the license distribution server to encrypt a license.

17. A license distribution server encrypting a license necessary for using an encrypted content and distributing the encrypted license to a user terminal connected in an information transmittable manner, the server comprising:
a license storing unit which stores the license;
a license encrypting unit which produces an encryption key by the same method as that by the user terminal using the same seed as the seed used by the user terminal to produce an encryption key for decrypting the encrypted license and encrypting the license for distribution; and
a license distribution unit which distributes the encrypted license for distribution to the user terminal.

18. A secure method of receiving a license at a user terminal in a digital content distribution system comprising a content distribution server that distributes a content, a license distribution server that distributes a license, and the user terminal connected to these servers, the method comprising the steps, carried out by the user terminal, of:
transmitting a content obtaining request including a content ID that uniquely specifies a content to the content distribution server;
receiving the content from the content distribution server;
producing a seed for producing a license encryption key for distribution to be used for encrypting a license and storing the seed in a tamper resistant module;
transmitting a license obtaining request including the seed to the license distribution server;
receiving an encrypted license for distribution from the license distribution server;
producing the encryption key used by the license distribution server to encrypt the license using the seed stored in the tamper resistant module by the same method as that by the license distribution server, decrypting the license, and checking a hash value;
deleting the seed stored in the tamper resistant module;
decrypting the content using the decrypted license;
producing a new arbitrary title key for storing in the user terminal and re-encrypting the content; and
replacing the title key of the license with the title key for storing and encrypting the license in a format resistant to unauthorized access.

19. A secure method of receiving a license at a user terminal in a digital content distribution system comprising a content distribution server that distributes a content, a license distribution server that distributes a license, and the user terminal connected to these servers, the method comprising the steps, carried out by the user terminal, of:
transmitting a content obtaining request including a content ID that uniquely specifies a content to the content distribution server;
receiving a content from the content distribution server;
producing a seed for producing a license encryption key for distribution to be used for encrypting a license in a tamper resistant module, storing a seed identifier association table in which a seed and a seed identifier to identify the seed are associated with each other, and storing the seed identifier outside the tamper resistant module;
transmitting a license obtaining request including the seed to the license distribution server;
receiving an encrypted license for distribution from the license distribution server;
obtaining a seed corresponding to the seed identifier stored outside the tamper resistant module based on the seed identifier association table stored in the tamper resistant module, producing the encryption key used by the license distribution server to encrypt the license by the same method as that by the license distribution server, decrypting the license, and checking a hash value;
deleting the seed and the corresponding seed identifier stored in the tamper resistant module from the seed identifier association table;
decrypting the content using the decrypted license;
producing a new arbitrary title key for storing in the user terminal and re-encrypting the content; and
replacing the title key of the license with the title key for storing and encrypting the license in a format resistant to unauthorized access.

20. A secure method of receiving a license at a user terminal in a digital content distribution system comprising a content distribution server that distributes a content, a license distribution server that distributes a license, and the user terminal connected to these servers, the method comprising the steps, carried out by the user terminal, of:
transmitting a content obtaining request including a content ID that uniquely specifies a content to the content distribution server;
receiving a content from the content distribution server;
producing and storing a seed for producing a license encryption key for distribution to be used for encrypting a license in a tamper resistant module, encrypting the seed in a format resistant to unauthorized access, and storing the encrypted seed outside the tamper resistant module;
transmitting a license obtaining request including the seed to the license distribution server;
receiving the encrypted license for distribution from the license distribution server;
producing the encryption key used by the license distribution server to encrypt the license by the same method as that by the license distribution server based on the seed stored in the tamper resistant module when there is the seed present in the module and the seed encrypted in the format resistant to unauthorized access and stored outside the tamper resistant module when the seed is not present in the module, decrypting the license, and checking a hash value;
deleting the seed stored in the tamper resistant module when the stored seed is present in the tamper resistant module in the previous step;
decrypting the content using the decrypted license;
producing a new arbitrary title key for storing in the user terminal and re-encrypting the content;
replacing the title key of the license with the title key for storing, and encrypting the license in a format resistant to unauthorized access; and
deleting the seed encrypted in the format resistant to unauthorized access and stored outside the tamper resistant module.

21. A secure method of receiving a license at a user terminal in a digital content distribution system comprising a content distribution server that distributes a content, a license distribution server that distributes a license, and the user terminal connected to these servers, the method comprising the steps, carried out by the user terminal, of:
transmitting a content obtaining request including a content ID that uniquely specifies a content to the content distribution server;
receiving a content from the content distribution server;
producing a seed for producing a license encryption key for distribution to be used for encrypting a license in a tamper resistant module, storing a seed identifier association table in which a seed and a seed identifier are associated with each other, and encrypting a seed and a seed identifier to be used by the license distribution server to encrypt a license for storing outside the tamper resistant module;
transmitting a license obtaining request including the seed to the license distribution server;
receiving an encrypted license for distribution from the license distribution server;
producing the encryption key used by the license distribution server to encrypt the license by the same method as that by the license distribution server based on the seed corresponding to the seed identifier stored outside the tamper resistant module when the seed is present in the module and the seed encrypted in the format resistant to unauthorized access and stored outside the tamper resistant module when the seed is not present in the module, decrypting the license, and checking a hash value;
deleting the seed and the corresponding seed identifier stored in the tamper resistant module only when the seed corresponding to the seed identifier is present in the tamper resistant module in the previous step;
decrypting the content using the decrypted license;
producing a new arbitrary title key for storing in the user terminal and re-encrypting the content;
replacing the title key of the license with the title key for storing and encrypting the license in a format resistant to unauthorized access; and
deleting the seed and the seed identifier encrypted in the format resistant to unauthorized access and stored outside the tamper resistant module.

22. A license receiving program for obtaining a necessary license for using a content from a license distribution server connected in an information transmittable manner, the program enabling a computer to serve as:
a seed producing/storing unit which produces and stores a seed for producing an encryption key to be used by the license distribution server to encrypt a license;
a license receiving unit which receives the license encrypted using the encryption key produced by the license distribution server based on the seed; and
an encryption conversion unit which produces an encryption key by the same method as that by the license distribution server based on the seed and decrypting the encrypted license using the encryption key.

23. A secure device accessible by a user terminal that obtains a license necessary for using a content from a license distribution server connected in an information transmittable manner, the device comprising:
a tamper resistant module externally accessible through a specially permitted path having a seed producing/storing unit which produces and stores a seed for producing an encryption key to be used by the license distribution server to encrypt a license and an encryption conversion unit which produces an encryption key by the same method as that by the license distribution server based on the seed, and decrypting the license encrypted using the encryption key; and
an information storing portion having a secure storing region accessible through the tamper resistant module and a general storing region externally accessible without special permission,
the seed producing/storing unit producing and storing a seed for producing an encryption key for an encrypted license obtained by the user terminal from the license distribution server,
the encryption conversion unit producing an encryption key based on the produced seed and decrypting the license using the produced encryption key,
the seed producing/storing unit deleting the seed when the decryption of the license is complete,
the encryption conversion unit decrypting the content obtained by the user terminal using the decrypted license and then re-encrypting the license and content using a title key unique to a receiving terminal or a secure device.

24. The secure device according to claim 23,
wherein the license and content re-encrypted by the encryption conversion unit are stored in the data storing region of the user terminal.

25. The secure device according to claim 23,
wherein the license re-encrypted by the encryption conversion unit is stored in the secure storing region.

26. The secure device according to claim 23,
wherein the license re-encrypted by the encryption conversion unit is stored in the secure region, and
wherein the content re-encrypted by the encryption conversion unit is stored in the general storing region.

27. A user terminal obtaining encrypted data from a server connected in an information transmittable manner, comprising:
a seed producing/storing unit which produces and stores a seed for producing an encryption key to be used by the server to encrypt data;
a data receiving unit which receives the data encrypted using the encryption key produced by the server based on the seed; and
an encryption conversion unit which produces an encryption key based on the seed by the same method as that by the server and decrypting the encrypted data using the encryption key,
wherein the seed is deleted from the seed producing/storing unit when the decryption of the data is complete.

28. The user terminal according to claim 27,
wherein the data decrypted by the user terminal is a license necessary for using the content.

29. The user terminal according to claim 27,
wherein the data decrypted by the user terminal is a content.
